# EUROPÄISCHE PATENTSCHRIFT

(11) **EP 3 202 922 B1**
(45) Veröffentlichungstag und Bekanntmachung des Hinweises auf die Patenterteilung: **07.11.2018**
(21) Anmeldenummer: 16000249.9
(22) Anmeldetag: 02.02.2016
(51) Int. Cl.: C21B 5/06, C21B 13/00, C21B 13/02

(54) **VERFAHREN UND ANLAGE ZUR HERSTELLUNG VON EISENSCHWAMM**
METHOD AND APPARATUS FOR MANUFACTURING SPONGE IRON
PROCEDE ET INSTALLATION DE FABRICATION D'EPONGES DE FER

(43) Veröffentlichungstag der Anmeldung: 09.08.2017
(73) Patentinhaber: Vuletic, Bogdan, 40547 Düsseldorf (DE); Vuletic, Vladan, Cambridge, MA 02139 (US)
(72) Erfinder: Vuletic, Bogdan, 40547 Düsseldorf (DE); Vuletic, Vladan, Cambridge, MA 02139 (US); Vuletic, Bojan, 40547 Düsseldorf (DE)
(74) Vertreter: Hauck Patentanwaltspartnerschaft mbB

(56) Entgegenhaltungen:
- EP-A1- 2 738 268
- WO-A1-2012/042352
- WO-A1-2012/163628
- WO-A1-2013/027084

## Beschreibung

Die vorliegende Erfindung betrifft ein Verfahren zur Herstellung von Eisenschwamm über ein Direktreduktionsverfahren, bei dem Reduktionsgas in eine DRI-Reduktionseinrichtung eingeführt und in dieser das Direktreduktionsverfahren durchgeführt wird.

Bei der Herstellung von Eisenschwamm in einer DRI(Direct Reduced Iron)-Anlage auf Basis von Erdgas als Energieträger wird das Erdgas unter Zuführung von wasserdampf- und kohlendioxidhaltigem Topgas in Katalytrohren und unter Nutzung der Wärme eines Brenngases in Verbindung mit einem NickelKatalysator zum wasserstoff- und kohlenmonoxidhaltigen Reduktionsgas umgewandelt. Da die Erdgaspreise in den letzten Jahren angestiegen sind und es bei den in Betrieb befindlichen DRI-Anlagen mit Katalyt-Rohren nicht möglich ist, unaufbereitetes Kokereigas aufgrund von Schwefel und höheren Kohlenwasserstoffen zur Herstellung von Reduktionsgas zu nutzen, wurden neue Verfahren, wie beispielsweise die Herstellung von Wasserstoff oder von Methan aus Kokereigas, entwickelt, um das Erdgas durch Kokereigas oder andere billigere methanhaltige Gase zu ersetzen. Der Hauptnachteil dieser Verfahren ist jedoch neben dem enormen Energieaufwand ein enormer Aufwand für Reinigung und Aufbereitung des Kokereigases und für die Entsorgung der Reinigungsprodukte. Ferner spielt die Umweltbelastung durch verschieden toxische Bestandteile eine große Rolle.

Aus der WO 2012/042352 A1 ist ein Verfahren bekannt, bei dem abgezogenes Topgas mit Ergänzungsgas, das CO und H₂ enthält, vermischt wird. Das erhaltene Gasgemisch wird nach Durchführung verschiedener Verfahrensschritte mit O₂ beaufschlagt. Einzelheiten über die Einführung von O₂ sind in dieser Veröffentlichung nicht beschrieben.

Aus der WO 2013/027084 A1 und der EP 2 738 268 A1 sind Verfahren bekannt, mit denen eine katalytische Reformierung durchgeführt wird.

Aus der WO 2012/163628 A1 ist ein Verfahren zur Herstellung von Eisenschwamm über ein Direktreduktionsverfahren bekannt, bei dem Reduktionsgas in eine DRI-Reduktionseinrichtung eingeführt und in dieser das Direktreduktionsverfahren durchgeführt wird. Als Reduktionsgas wird hier ein Kohlenwasserstoff und Wasserstoff enthaltender Gasstrom bezeichnet. Bei dem Gas kann es sich um Kokereigas handeln. Auch kann ein Zusatzreduktionsgas zugesetzt werden, bei dem es sich um Topgas handeln kann. Eine Oxidation mit Sauerstoff und/oder eine Reformierung mittels CO₂ und H₂O kann durchgeführt werden.

Der vorliegenden Erfindung liegt die Aufgabe zugrunde, ein Verfahren der eingangs wiedergegebenen Art zur Verfügung zu stellen, das auf besonders effiziente Weise realisiert werden kann.

Diese Aufgabe wird erfindungsgemäß durch ein Verfahren gemäß Patentanspruch 1 gelöst.

Bei einem COG(Coke Oven Gas)-Reformer handelt es sich um einen Kokereigas-Reformer, d.h. um eine Einrichtung zur Umwandlung von Kokereigas. Erfindungsgemäß wird ein neues einfaches Verfahren zur Verfügung gestellt, mit dem das Kokereigas und/oder das Erdgas ohne großen technischen Aufwand so aufbereitet und zu Reduktionsgas umgewandelt wird, dass es zur Herstellung von Eisenschwamm in einer DRI-Reduktionseinrichtung verwendet werden kann. Bei der Umwandlung des Kokerei- und/oder Erdgases zu Reduktionsgas werden Methan und höhere Kohlenwasserstoffe inklusive toxische Bestandteile desselben zu H₂ und CO zerlegt.

Durch partielle Oxidation von höheren Kohlenwasserstoffen und Methan durch Sauerstoff zu H₂ und CO und durch Verbrennung eines Teiles des Gases zu Wasserdampf und Kohlendioxid wird die Temperatur im Dome des COG-Reformers bei etwa 1.000 °C aufrechterhalten. Bei dieser Temperatur wird auch ein Teil des Methans durch Reaktionen mit eingeführtem Wasserdampf und dem im COG-Reformer gebildeten Wasserdampf und Kohlendioxid zu H₂ und CO zerlegt. Obwohl ein höherer Gehalt an Wasserdampf und Kohlendioxid im Reduktionsgas zu einer schnelleren Zerlegung des Methans und zur Reduzierung von Rußausfall durch thermischen Zerfall von Methan führt, wodurch der COG-Reformer kleiner ausgebildet sein kann, sollte deren Gehalt im Reduktionsgas nicht zu hoch sein, um das erforderliche Reduktionspotential des Reduktionsgases aufrechtzuerhalten.

Erfindungsgemäß geht man so vor, dass das Kokereigas und/oder Erdgas mit dem wasserdampf- und kohlendioxidhaltigen Gas vermischt wird und das erhaltene Gasgemisch sowie Sauerstoff in den COG-Reformer eingeführt werden. Dabei werden das erhaltene Gasgemisch und Sauerstoff in den unteren Teil des COG-Reformers eingeführt, während eine Teilmenge des Sauerstoffes in den mittleren Bereich des COG-Reformers eingeführt wird.

In Weiterbildung der Erfindung wird das Reduktionsgas teilweise im COG-Reformer aus Kokereigas und/oder Erdgas und teilweise aus dem Topgas derselben DRI-Reduktionseinrichtung hergestellt. Hierbei wird das Reduktionsgas vorzugsweise zu etwa gleichen Teilen aus Kokereigas und/oder Erdgas und aus dem Topgas der Reduktionseinrichtung produziert.

Insbesondere wird das Reduktionsgas aus dem Topgas der Reduktionseinrichtung durch Kondensation von Wasserdampf und Ausscheidung von Kohlendioxid hergestellt.

Zur Regulierung wird dem Austrittsgas des COG-Reformers vorzugsweise eine Teilmenge des Kokereigases und/oder Erdgases zugeführt.

Es hat sich als vorteilhaft erwiesen, dass das Gasgemisch aus Kokereigas und/oder Erdgas und dem wasserdampf- und kohlendioxidhaltigen Gas vor der Einführung in den COG- , Reformer erhitzt wird, wobei seine Temperatur in Abhängigkeit vom Methangehalt eingestellt wird.

Zur Einführung des Gasgemisches aus dem Kokereigas und/oder Erdgas sowie dem wasserdampf- und kohlendioxidhaltigen Gas und des Sauerstoffes findet vorzugsweise mindestens eine Doppellanze Verwendung, wobei über das innere Lanzenrohr der Sauerstoff und über den Zwischenraum zwischen Innenrohr und Außenrohr das Gasgemisch in den COG-Reformer eingeführt werden.

Als wasserdampf- und kohlendioxidhaltiges Gas wird daher das vorzugsweise in einer Gaswäsche abgekühlte und gewaschene Topgas aus einer DRI-Reduktionseinrichtung verwendet. Durch Einstellung der Vorlaufwassertemperatur für die Gaswäsche kann dabei das Verhältnis Wasserdampf/Kohlendioxid in Abhängigkeit vom Methangehalt des dem COG-Reformer zugeführten vorerhitzten Mischgases und von Prozessbedingungen zugunsten der einen oder anderen Komponente verschoben werden. Das Verhältnis Wasserdampf/Kohlendioxid im Mischgas wirkt sich auch auf das Verhältnis Wasserstoff/ Kohlenmonoxid im Reduktionsgas aus. Bei einem sehr hohen Anteil von Erdgas und damit auch bei einem höheren Anteil von Methan in der Gasmischung kann dieser wasserdampf- und kohlendioxidhaltigen Gasmischung auch Wasserdampf zugegeben werden.

Wie vorstehend ausgeführt, wird vorzugsweise ein Teil des Reduktionsgases, das der DRI-Reduktionseinrichtung zugeführt wird, im COG-Reformer produziert, während ein anderer Teil aus dem Topgas einer DRI-Reduktionseinrichtung durch Kondensation von Wasserdampf und Ausscheidung von Kohlendioxid hergestellt wird. Das aus dem Topgas hergestellte Reduktionsgas wird anschließend insbesondere in einem Wärmetauscher auf die erforderliche Temperatur erhitzt, dem Reduktionsgas aus dem COG-Reformer beigemischt und als Reduktionsgas derselben Reduktionseinrichtung zugeführt und zur Herstellung von Eisenschwamm verwendet.

Zur Ausscheidung von Kohlendioxid aus dem Topgas können herkömmliche Verfahren, wie PSA (Pressure Swing Adsorption) oder chemische Verfahren, eingesetzt werden.

Bei der hier erwähnten DRI-Reduktionseinrichtung wird Eisenschwamm hergestellt, wobei in diesem Prozess bei erhöhten Temperaturen H₂ und CO direkt mit Eisenoxiden reagieren, ohne Eisenerz oder Pellets zu schmelzen.

Wie bereits vorstehend erwähnt, wird das Gemisch aus Kokereigas und/oder Erdgas und dem wasserdampf- und kohlendioxidhaltigen Gas vor der Einführung in den COG-Reformer erhitzt. Dies dient dazu, um die Sauerstoffmenge für den COG-Reformer und den Wasserdampf- und Kohlendioxidgehalt des Reduktionsgases niedrig zu halten. Die entsprechende Vorerhitzungstemperatur sollte jedoch so gewählt werden, dass es in keiner der entsprechenden Einrichtungen zu Rußausfall kommt.

Bei Ausfällen der Kokereianlage kann das Kokereigas durch Erdgas ersetzt oder bei Mangel an Kokereigas dem Kokereigas beigemischt und im COG-Reformer zu Reduktionsgas umgewandelt werden. In beiden Fällen können die dem Kokereigas oder dem Erdgas oder der entsprechenden Gasmischung zugeführte Menge des wasserdampf- und kohlendioxidhaltigen Gases und die Temperatur der vorerhitzten Gasmischung dem Methangehalt der betreffenden Gasmischung angepasst werden, um hierdurch den thermischen Zerfall von Methan und die Rußbildung im Wärmetauscher zur Vorerhitzung und im COG-Reformer zu vermeiden.

Zielsetzung des erfindungsgemäßen Verfahrens ist es vorzugsweise, das teure Erdgas durch Kokereigas bei der Herstellung von Eisenschwamm zu ersetzen und auf einen Reformer mit seinen teuren Katalytrohren und dem ebenfalls kostspieligen Katalysator des Standes der Technik zu verzichten. Das erfindungsgemäße Verfahren ermöglicht diesen Verzicht, auch wenn das Reduktionsgas im Fall eines Mangels an Kokereigas aus einer Mischung von Kokerei- und Erdgas hergestellt wird.

Bei dem erfindungsgemäßen Verfahren wird das Kokerei- und/oder Erdgas durch partielle Oxidation von höheren Kohlenwasserstoffen und Methan durch Sauerstoff zu H₂ und CO und zum Teil durch Verbrennung der brennbaren Gaskomponenten zu Wasserdampf und Kohlendioxid auf eine so hohe Temperatur erhitzt, dass die mit dem Gasgemisch eingebrachten höheren Kohlenwasserstoffe und Methan mit dem im Gasgemisch mitgeführten und im COG-Reformer gebildeten Wasserdampf und Kohlendioxid zur Reaktion gebracht und zu H₂ und CO zerlegt werden. Dabei werden höhere Kohlenwasserstoffe, Methan und andere organische Bestandteile so weit zerlegt, dass das so hergestellte Reduktionsgas direkt oder vermischt mit dem aus dem Topgas der Reduktionseinrichtung hergestellten und erhitzten Reduktionsgas als Reduktionsgas zur Herstellung von Eisenschwamm in einer Reduktionseinrichtung verwendet werden kann.

Speziell ist vorgesehen, das Gasgemisch auf eine relativ hohe Temperatur (im Wärmetauscher) zu erhitzen, um den Sauerstoffverbrauch für den COG-Reformer und den Wasserdampf- und Kohlendioxidgehalt im Reduktionsgas niedrig zu halten.

Die Einführung des Gasgemisches zusammen mit dem Sauerstoff erfolgt vorzugsweise in dem unteren Bereich des COG-Reformers über mindestens eine Doppellanze. Das Gasgemisch wird daher direkt neben dem Sauerstoff eingeblasen, so dass bei hohen Temperaturen höhere Kohlenwasserstoffe und Methan direkt durch Reaktionen mit dem Sauerstoff, Wasserdampf und Kohlendioxid zu H₂ und CO umgewandelt werden.

Das erfindungsgemäße Verfahren ist somit relativ einfach und in Bezug auf Qualität und Zusammensetzung des Einsatzgases sehr flexibel. Es stellt eine Alternative zur Herstellung von Reduktionsgas ohne Nutzung eines NickelKatalysators dar.

Das erfindungsgemäße Verfahren bietet sich an, herkömmliche komplexere und apparativ aufwendigere Verfahren nicht nur für den Bau von neuen Anlagen, sondern auch bei hohen Erdgaspreisen in in Betrieb befindlichen Anlagen zu ersetzen.

Dabei können die meisten Einrichtungen der in Betrieb befindlichen DRI-Anlagen mit einem geringen Aufwand für Umbau und kleinere Anpassungen zu neuen Prozessbedingungen weiterhin benutzt werden. Hierzu kann beispielsweise der bekannte Katalyt-Reformer verkleinert und der Katalysator entleert werden. Die Katalytrohre können zur Erhitzung des Reduktionsgases insbesondere aus der Kohlendioxid-Ausscheidungsanlage genutzt werden. Auch ein Wärmetauscher, in dem das Feedgas für den Katalyt-Reformer vorgewärmt wird, kann zur Vorerhitzung des Gasgemisches, das dem COG-Reformer zugeführt wird, genutzt werden.

Bei zu hohem Schwefelwasserstoffgehalt im Kokereigas ist es jedoch erforderlich, das Kokereigas zu entschwefeln, bevor es dem COG-Reformer zugeführt wird, um den Schwefelgehalt im Eisenschwamm auf den für ein Stahlwerk akzeptablen Wert zu bringen.

Die vorliegende Erfindung betrifft ferner eine Anlage zur Herstellung von Eisenschwamm, insbesondere zur Durchführung des vorstehend beschriebenen Verfahrens, mit den Merkmalen von Patentanspruch 7.

Vorzugsweise weist die Anlage eine Einrichtung zur Abführung des Topgases der DRI-Reduktionseinrichtung aus derselbenund zur Zuführung des Topgases zum Reduktionsgas aus dem COG-Reformer auf. Auf diese Weise können der Anteil des Reduktionsgases aus dem COG-Reformer und der Anteil des Topgases der DRI-Reduktionseinrichtung in Bezug auf das zu erzeugende Reduktionsgas variiert werden.

Die Einrichtung zur Abführung und Zuführung des Topgases besitzt vorzugsweise eine Einrichtung zur Kondensation von Wasserdampf und zur Ausscheidung von Kohlendioxid.

Die Anlage weist eine Einrichtung zum Vermischen des Kokerei- und/oder Erdgases mit dem wasserdampf- und kohlendioxidhaltigen Gas (Topgas aus der DRI-Reduktionseinrichtung) vor der Einführung in den COG-Reformer auf. Speziell ist vorgesehen, dass die Anlage Einrichtungen zur Einführung des erhaltenen Gasgemisches und von Sauerstoff in den unteren Teil des COG-Reformers und eine Einrichtung zur Einführung von Sauerstoff in den mittleren Teil des COG-Reformers umfasst. Vorzugsweise besitzt sie mindestens eine Doppellanze zur Einführung des Gasgemisches und von Sauerstoff in den COG-Reformer. Die als Doppelrohr ausgebildete Doppellanze hat insbesondere ein wassergekühltes und durch ein Schutzrohr umhülltes Innenrohr.

In Weiterbildung der Erfindung besitzt die Anlage Einrichtungen zur Zuführung einer Teilmenge des Kokereigases und/oder Erdgases zum Austrittsgas des COG-Reformers. Ferner besitzt sie vorzugsweise eine Einrichtung zum Erhitzen des wasserdampf- und kohlendioxidhaltigen Gases (Topgases aus einer DRI-Reduktionseinrichtung) vor der Einführung in den COG-Reformer.

Die erfindungsgemäß ausgebildete Anlage besitzt somit eine DRI-Reduktionseinrichtung, der vorzugsweise zum Teil aus einer vorerhitzten Mischung aus Kokerei- und/oder Erdgas und wasserdampf- und kohlendioxidhaltigem Gas in einem COG-Reformer unter Zuführung von Sauerstoff hergestelltes Reduktionsgas und zum Teil das aus dem Topgas derselben DRI-Reduktionseinrichtung hergestellte und danach erhitzte Reduktionsgas zugeführt und zur Herstellung von Eisenschwamm verwendet wird.

Speziell weist die Anlage auch Einrichtungen zur Vorerhitzung der Gasmischung für den COG-Reformer auf. Neben den erwähnten Einrichtungen zur Kondensation von Wasserdampf aus dem Topgas und zur Ausscheidung von Kohlendioxid aus demselben sind vorzugsweise Einrichtungen zur Erhitzung des hergestellten Reduktionsgases auf die erforderliche Temperatur vorgesehen. Neben den Einrichtungen zum Einblasen des Gasgemisches und des Sauerstoffes in den COG-Reformer sind vorzugsweise auch Einrichtungen zur Zugabe des Kokerei- und/oder Erdgases in die Austrittsleitung des COG-Reformers zur Einstellung des Methangehaltes des Reduktionsgases für die Reduktionseinrichtung vorgesehen.

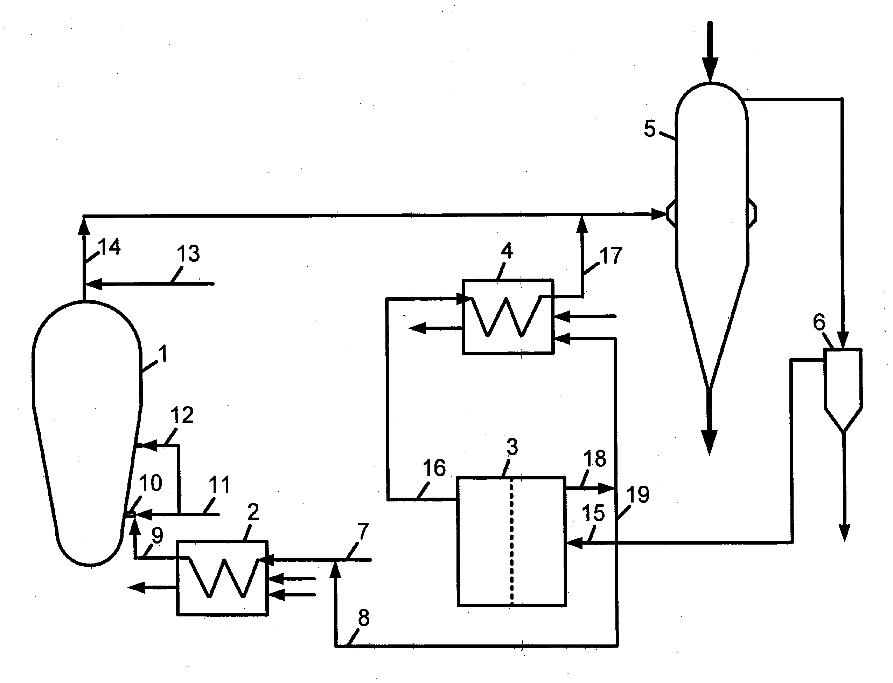

Die Erfindung wird nachfolgend anhand eines Ausführungsbeispieles in Verbindung mit der Zeichnung im Einzelnen erläutert. Die einzige Figur zeigt in schematischer Darstellung den Aufbau einer Anlage zur Herstellung von Eisenschwamm mit DRI-Reduktionseinrichtung und einem COG-Reformer.

In den unteren Bereich eines COG-Reformers 1 wird eine Mischung aus Kokerei- und/oder Erdgas - zugeführt über eine Leitung 7 - und aus wasserdampf- und kohlendioxidhaltigem Gas aus einer Topgaswäsche 6 - zugeführt über eine Leitung 8 - vorerhitzt in einem Wärmetauscher 2 und über eine Leitung 9 und Doppellanzen 10 in den unteren Bereich des COG-Reformers 1 eingeblasen und durch Einblasen der Hauptmenge des Sauerstoffes über Doppellanzen 10 - zugeführt über eine Leitung 11 - zum Reduktionsgas umgewandelt. Das Einblasen des Sauerstoffes erfolgt über das Innenrohr und die Zuführung des vorerhitzten Mischgases über den Zwischenraum zwischen Innen- und Außenrohr der Doppellanze 10. Eine kleinere Menge des Sauerstoffes - zugeführt über die gemeinsame Sauerstoffleitung 11 - wird über einfache, radial am Umfang des COG-Reformers 1 angebrachte Sauerstofflanzen 12 in den mittleren Bereich des COG-Reformers 1 eingeblasen. Der über Sauerstofflanzen 12 in den mittleren Bereich des COG-Reformers 1 eingeblasene Sauerstoff dient zur Regelung der Dome-Temperatur des COG-Reformers 1 und gleichzeitig zur Durchmischung des aus dem unteren Bereich des COG-Reformers 1 aufsteigenden Gases. Dem im COG-Reformer 1 produzierten Reduktionsgas - herausgeleitet über eine Leitung 14 - wird über eine Leitung 13 Kokerei- oder Erdgas zugegeben, um den Methangehalt des Reduktionsgases für die Reduktionseinrichtung 5 einzustellen. Das aus der Reduktionseinrichtung 5 herausgeleitete Topgas wird in einer Gaswäsche 6 gewaschen und gekühlt, wobei der in der Reduktionseinrichtung 5 gebildete Wasserdampf auskondensiert. Die Hauptmenge des gewaschenen Topgases wird über eine Leitung 15 einer Kohlendioxid-Ausscheidungsanlage 3 zugeführt. Das wasserstoff- und kohlenmonoxidhaltige Produktgas wird über eine Leitung 16 einem Reduktions-Erhitzer 4 zugeführt, auf etwa 900 °C erhitzt und über eine Leitung 17 dem im COG-Reformer 1 hergestellten Reduktionsgas zugeführt, über die Leitung 13 zugemischt, der Reduktionseinrichtung 5 zugeführt und zur Herstellung von Eisenschwamm, das am unteren Ende der Reduktionseinrichtung 5 ausgetragen wird, verwendet. Dem kohlendioxidhaltigen Abgas (Tail-Gas), das über eine Leitung 18 aus der Kohlendioxid-Ausscheidungsanlage 3 herausgeleitet wird, wird über eine Leitung 19 eine kleinere Menge des Topgases aus der Gaswäsche 6 zugegeben und dem Reduktionsgas-Erhitzer 4 als Heizmedium zugeführt.

Bei der DRI-Anlage mit einem COG-Reformer 1 handelt es sich um einen einfachen Reformer, in dem durch Reformieren von Kokerei- und/oder Erdgas sowie durch Zuführung von Oxidationsmittel Reduktionsgas hergestellt und über die Leitung 13 der Reduktionseinrichtung 5 zugeführt wird. Der in der Reduktionseinrichtung 5 gebildete Wasserdampf wird in einer Gaswäsche 6 und das gebildete Kohlendioxid in einer Kohlendioxid-Ausscheidungsanlage 3 ausgeschieden. Das so hergestellte Reduktionsgas wird in einem Wärmetauscher 4 auf die erforderliche Temperatur erhitzt, dem heißen Reduktionsgas aus dem COG-Reformer 1 zugemischt, der Reduktionseinrichtung 5 zugeführt und zur Herstellung von Eisenschwamm verwendet. Die dem Kokerei- und/oder Erdgas zugeführte Menge des wasserdampf- und kohlendioxidhaltigen Gases und die Temperatur, auf die das Mischgas vorerhitzt wird, bevor es in den COG-Reformer 1 eingeblasen wird, werden in Abhängigkeit vom Methangehalt des Mischgases eingestellt. Eine höhere Vorerhitzungstemperatur des Mischgases führt zu einem niedrigeren Sauerstoffverbrauch und einem höheren Reduktionspotential des hergestellten Reduktionsgases. Zu hohe Vorerhitzungstemperaturen sollen jedoch vermieden werden, um Kohlenstoffausscheidung und Rußausfall durch thermischen Zerfall von Methan im Wärmetauscher 2 und im COG-Reformer 1 gering zu halten.

Da der Wasserdampf ein viel stärkeres Mittel gegen Rußausfall als Kohlendioxid ist, wird bei höherem Methangehalt des Mischgases die Gaswäsche 6 mit einer höheren Vorlaufwassertemperatur gefahren, wodurch mehr Wasserdampf über die Leitung 8 dem Kokerei- und/oder Erdgas - zugeführt über die Leitung 7 - dem Vorerhitzer 2 zugeführt wird, wodurch auch das Gasgemisch im Vorerhitzer 2 auf höhere Temperatur erhitzt werden kann. Bei sehr hohem Methangehalt des Reduktionsgases kann dieser Teilmenge des Topgases aus der Gaswäsche 6 auch Wasserdampf zugeführt werden.

Um das Oxidationsmittel und das vorerhitzte Mischgas so gut wie möglich zu vermischen und um Sauerstoff und Methan zur Reaktion zu bringen, werden beide Medien über radial am Umfang angebrachte Doppellanzen 10 in den unteren Bereich des COG-Reformers 1 eingeblasen, der Sauerstoff über das innere Rohr und die vorerhitzte Gasmischung durch den Zwischenraum zwischen Innen- und Außenrohr der Doppellanzen 10 eingeführt.

Eine kleinere Teilmenge des Sauerstoffes wird über mehrere am Umfang des COG-Reformers angeordnete Sauerstofflanzen 12 mit einer höheren Geschwindigkeit in den mittleren Bereich des COG-Reformers 1 eingeblasen, um die Gaskomponenten im aufsteigenden Gas aus dem unteren Bereich des COG-Reformers 1 besser zu vermischen und die Effizienz des COG-Reformers 1 zu erhöhen. Die dem mittleren Bereich des COG-Reformers 1 zugeführte Sauerstoffmenge dient gleichzeitig zur Regelung der Dome-Temperatur des COG-Reformers 1.

Zur Feineinstellung des Methangehaltes des Reduktionsgases für die Reduktionseinrichtung 5 wird dem Austrittsgas aus dem COG-Reformer 1 eine entsprechende Menge von Kokerei- oder Erdgas zugeführt. Die Grundeinstellung des Methangehaltes erfolgt durch Einstellung des Verhältnisses vorerhitztes Mischgas/Sauerstoff, die über Doppellanzen 10 dem unteren Bereich des COG-Reformers 1 zugeführt werden.

Die Einstellung der Temperatur des Reduktionsgasgemisches aus dem COG-Reformer 1 und aus der Kohlendioxid-Ausscheidungsanlage 3 bzw. aus dem Gaserhitzer 4, das der Reduktionseinrichtung 5 zugeführt wird, erfolgt über die Temperatur des im COG-Reformer 1 hergestellten Reduktionsgases.

Bei den in Betrieb befindlichen DRI-Anlagen, bei denen die Ergaspreise zu hoch geworden sind und der Betrieb der Anlagen unwirtschaftlich geworden ist, kann bei Umbau der Anlagen von Katalyt-Reformer auf COG-Reformer 1 ein Teil des Katalyt-Reformers und das gesamte Rekusystem weiterhin benutzt werden. Die Nutzung des gesamten Katalyt-Reformers ist nicht mehr erforderlich, da der Wärmebedarf für die Erhitzung des Reduktionsgases aus der Kohlendioxid-Ausscheidungsanlage auf die erforderlich Reduktionstemperatur nicht so hoch ist wie für die Zerlegung von Methan durch Wasserdampf und Kohlendioxid in einem Katalyt-Reformer. Hierbei bietet sich an, nur ein Teil des Katalyt-Reformers inklusive der Katalytrohre für die Erhitzung des Reduktionsgases aus der Kohlendioxid-Ausscheidungsanlage auf etwa 900 °C zu nutzen und den Feedgas-Reku zum Vorerhitzen der Gasmischung für den COG-Reformer 1. Es sind jedoch geringe Anpassungen der Menge des Brenngases, des Verhältnisses Luft/Brenngas und der Höhe der Temperaturen des Verbrennungsgases erforderlich.

Das Innenrohr der als Doppelrohr ausgeführten Doppellanze 10 wird mit einem Schutzrohr versehen und kann aus hochhitzebeständigem Stahl hergestellt oder als wassergekühlte Lanze ausgeführt werden.

Bei Umbau einer herkömmlichen DRI-Anlage auf Erdgasbasis auf Kokerei- und/oder andere Gase, wobei der Katalyt-Reformer durch einen COG-Reformer 1 ersetzt wird, werden der Katalyt-Reformer und Rekus einer in Betrieb befindlichen Anlage so umgebaut, dass nur ein Teil des Katalyt-Reformers beibehalten wird. Der Katalysator wird dabei entleert und die Katalytrohre werden zur Erhitzung des Reduktionsgases aus der Kohlendioxid-Ausscheidungsanlage 3 und der Feedgas-Vorwärmer zum Vorwärmen des Mischgases für den COG-Reformer 1 verwendet.

## Patentansprüche

1. Verfahren zur Herstellung von Eisenschwamm über ein Direktreduktionsverfahren, bei dem Reduktionsgas in eine DRI-Reduktionseinrichtung eingeführt und in dieser das Direktreduktionsverfahren durchgeführt wird, wobei Kokereigas und/oder Erdgas durch Zugabe von wasserdampf- und kohlendioxidhaltigem Gas, bei dem es sich um Topgas aus einer DRI-Reduktionseinrichtung (5) handelt, und von Sauerstoff in einem COG-Reformer (1) zu dem Reduktionsgas reformiert werden und wobei das Kokereigas und/oder Erdgas mit dem Topgas der DRI-Reduktionseinrichtung (5) vermischt und das erhaltene Gasgemisch und Sauerstoff in den unteren Teil des COG-Reformers (1) und eine Teilmenge des Sauerstoffs in den mittleren Bereich des COG-Reformers (1) eingeführt werden.

2. Verfahren nach Anspruch 1, **dadurch gekennzeichnet, dass** das Reduktionsgas teilweise im COG-Reformer (1) aus Kokereigas und/oder Erdgas und teilweise aus dem Topgas derselben DRI-Reduktionseinrichtung (5) hergestellt wird.

3. Verfahren nach Anspruch 2, **dadurch gekennzeichnet, dass** das Reduktionsgas zu etwa gleichen Teilen aus dem Austrittsgas des COG-Reformers (1) und aus dem Topgas der Reduktionseinrichtung (5) hergestellt wird.

4. Verfahren nach einem der vorangehenden Ansprüche, **dadurch gekennzeichnet, dass** dem Austrittsgas des COG-Reformers (1) eine Teilmenge des Kokereigases und/oder Erdgases zugeführt wird.

5. Verfahren nach einem der vorangehenden Ansprüche, **dadurch gekennzeichnet, dass** das Gasgemisch aus Kokereigas und/oder Erdgas und dem wasserdampf- und kohlendioxidhaltigen Gas vor der Einführung in den COG-Reformer (1) erhitzt wird, wobei seine Temperatur in Abhängigkeit vom Methangehalt eingestellt wird.

6. Verfahren nach einem der vorangehenden Ansprüche, **dadurch gekennzeichnet, dass** zur Einführung des Gasgemisches aus dem Kokereigas und/oder Erdgas sowie dem wasserdampf- und kohlendioxidhaltigen Gas und des Sauerstoffes mindestens eine Doppellanze (10) verwendet wird, wobei über das innere Lanzenrohr der Sauerstoff und über den Zwischenraum zwischen Innenrohr und Außenrohr das Gasgemisch in den COG-Reformer (1) eingeführt werden.

7. Anlage zur Herstellung von Eisenschwamm, insbesondere zur Durchführung des Verfahrens nach einem der Ansprüche 1 bis 6, mit einer DRI-Reduktionseinrichtung, einer Einführeinrichtung von Reduktionsgas in die DRI-Reduktionseinrichtung, einem COG-Reformer (1), in dem Kokereigas und/oder Erdgas sowie wasserdampf- und kohlendioxidhaltiges Gas, bei dem es sich um Topgas aus einer DRI-Reduktionseinrichtung (5) handelt, und Sauerstoff zu dem Reduktionsgas reformiert werden, wobei das Kokereigas und/oder Erdgas mit dem Topgas der DRI-Reduktionseinrichtung (5) vermischt und das erhaltene Gasgemisch und Sauerstoff in den unteren Teil des COG-Reformers (1) und eine Teilmenge des Sauerstoffs in den mittleren Bereich des COG-Reformers (1) eingeführt werden.

8. Anlage nach Anspruch 7, **dadurch gekennzeichnet, dass** sie eine Einrichtung zur Abführung des Topgases der DRI-Reduktionseinrichtung (5) aus derselben und zur Zuführung des Topgases zum Reduktionsgas aus dem COG-Reformer (1) aufweist.

9. Anlage nach einem der Ansprüche 7 oder 8, **dadurch gekennzeichnet, dass** sie Einrichtungen zur Zuführung einer Teilmenge des Kokereigases und/oder Erdgases zum Austrittsgas des COG-Reformers (1) aufweist.

10. Anlage nach einem der Ansprüche 7 bis 9, **dadurch gekennzeichnet, dass** sie eine Einrichtung zum Erhitzen des wasserdampf- und kohlendioxidhaltigen Gases vor der Einführung in den COG-Reformer (1) besitzt.

11. Anlage nach einem der Ansprüche 7 bis 10, **dadurch gekennzeichnet, dass** sie mindestens eine Doppellanze (10) zur Einführung des Gasgemisches und von Sauerstoff in den COG-Reformer (1) aufweist.

12. Anlage nach Anspruch 11, **dadurch gekennzeichnet, dass** die als Doppelrohr ausgebildete Doppellanze (10) ein wassergekühltes und durch ein Schutzrohr umhülltes Innenrohr aufweist.

## Claims

1. A method of producing sponge iron by means of a direct reduction method according to which reduction gas is introduced into a DRI reduction apparatus and the direct reduction method is carried out in the same wherein coke oven gas and/or natural gas is reformed in a COG reformer (1) to the reduction gas by the addition of water vapor-containing and carbon dioxide-containing gas, which is top gas from a DRI reduction apparatus (5), and by oxygen and wherein the coke oven gas and/or the natural gas is mixed with the top gas of the DRI reduction apparatus (5) and the obtained gas mixture and oxygen are introduced into the lower part of the COG reformer (1) and a part-amount of the oxygen is introduced into the middle portion of the COG reformer (1)

2. The method according to claim 1, **characterised in that** the reduction gas is partly produced from coke oven gas and/or natural gas and partly from the top gas of the same DRI reduction apparatus (5) in the COG reformer.

3. The method according to claim 2, **characterised in that** the reduction gas is produced from the exhaust gas of the COG reformer (1) and from the top gas of the reduction apparatus (5) at approximately same parts.

4. The method according to one of the preceding claims, **characterised in that** a part-amount of the coke oven gas and/or natural gas is supplied to the exhaust gas of the COG reformer.

5. The method according to one of the preceding claims, **characterised in that** the gas mixture of coke oven gas and/or natural gas and the water vapor-containing and carbon dioxide-containing gas is heated prior to the introduction into the COG reformer (1) wherein its temperature is adjusted in response to the methane content.

6. The method according to one of the preceding claims, **characterised in that** at least one double lance (10) is used for the introduction of the gas mixture of the coke oven gas and/or natural gas as well as water vapor-containing and carbon dioxide-containing gas wherein oxygen is introduced through the inner lance pipe and the gas mixture is introduced through the intermediate space between the inner pipe and outer pipe into the COG reformer (1) .

7. A plant for producing sponge iron, especially for carrying out the method according to one of the claims 1 to 6, comprising a DRI reduction apparatus, means for introducing reduction gas into the DRI reduction apparatus, a COG reformer (1) in which coke oven gas and/or natural gas as well as water vapor-containing gas and carbon dioxide-containing gas, which is top gas from a DRI reduction apparatus (5), and oxygen are reformed to the reduction gas wherein the coke oven gas and/or natural gas are mixed with the top gas of the DRI reduction apparatus (5) and the obtained gas mixture and oxygen are introduced into the lower part of the COG reformer (1) and a part-amount of the oxygen is introduced into the middle portion of the COG-reformer (1).

8. The plant according to claim 7 **characterised in that** it has means for discharging the top gas of the DRI reduction apparatus (5) from the same and for supplying the top gas to the reduction gas from the COG reformer (1).

9. The plant according to one of the claims 7 or 8 **characterised in that** it has means for supplying a part-amount of the coke oven gas and/or natural gas to the exhaust gas of the COG reformer (1).

10. The plant according to one of the claims 7 to 9, **characterised in that** it has means for heating the water vapor-containing and carbon dioxide-containing gas prior to the introduction into the COG reformer (1).

11. The plant according to one of the claims 7 to 10, **characterised in that** it includes at least a double lance (10) for the introduction of the gas mixture and of oxygen into the COG reformer (1).

12. The plant according to claim 11, **characterised in that** the double lance (10) formed as double pipe has a water-cooled inner pipe which is wrapped by a protection pipe.

## Revendications

1. Procédé servant à fabriquer une éponge de fer par l'intermédiaire d'un procédé de réduction directe, où du gaz de réduction est introduit dans un dispositif de réduction DRI et le procédé de réduction directe est mis en oeuvre dans ce dernier, dans lequel du gaz de cokerie et/ou du gaz naturel sont réformés dans une unité de reformage COG (1) en le gaz réducteur par ajout d'un gaz contenant de la vapeur d'eau et du dioxyde de carbone, qui est un gaz supérieur issu d'un dispositif de réduction DRI (5), et d'oxygène et dans lequel le gaz de cokerie et/ou le gaz naturel sont mélangés au gaz supérieur du dispositif de réduction DRI (5) et le mélange de gaz obtenu et l'oxygène sont introduits dans la partie inférieure de l'unité de reformage COG (1) et une quantité partielle d'oxygène est introduite dans la zone centrale de l'unité de reformage COG (1).

2. Procédé selon la revendication 1, **caractérisé en ce que** le gaz réducteur est fabriqué en partie dans l'unité de reformage COG (1) à partir du gaz de cokerie et/ou du gaz naturel et en partie à partir du gaz supérieur dudit dispositif de réduction DRI (5).

3. Procédé selon la revendication 2, **caractérisé en ce que** le gaz réducteur est fabriqué en des parts à peu près égales à partir du gaz de sortie de l'unité de reformage COG (1) et à partir du gaz supérieur du dispositif de réduction (5).

4. Procédé selon l'une quelconque des revendications précédentes, **caractérisé en ce qu'**une quantité partielle du gaz de cokerie et/ou du gaz naturel est amenée au gaz de sortie de l'unité de reformage COG (1).

5. Procédé selon l'une quelconque des revendications précédentes, **caractérisé en ce que** le mélange de gaz composé du gaz de cokerie et/ou du gaz naturel et du gaz contenant de la vapeur d'eau et du dioxyde de carbone est réchauffé avant l'introduction dans l'unité de reformage COG (1), dans lequel sa température est réglée en fonction de la teneur en méthane.

6. Procédé selon l'une quelconque des revendications précédentes, **caractérisé en ce qu'**est utilisée au moins une double lance (10) pour introduire le mélange de gaz composé du gaz de cokerie et/ou du gaz naturel ainsi que du gaz contenant de la vapeur d'eau et du dioxyde de carbone et de l'oxygène, dans lequel l'oxygène et le mélange de gaz sont introduits dans l'unité de reformage COG (1) respectivement par l'intermédiaire du tuyau de lance intérieur et par l'intermédiaire de l'espace intermédiaire entre le tuyau intérieur et le tuyau extérieur.

7. Installation servant à fabriquer une éponge de fer, en particulier servant à mettre en oeuvre le procédé selon l'une quelconque des revendications 1 à 6, avec un dispositif de réduction DRI, un dispositif d'introduction de gaz réducteur dans le dispositif de réduction DRI, une unité de reformage COG (1), dans laquelle du gaz de cokerie et/ou du gaz naturel ainsi qu'un gaz contenant de la vapeur d'eau et du dioxyde de carbone, qui est du gaz supérieur issu d'un dispositif de réduction DRI (5), et de l'oxygène sont reformés en le gaz réducteur, dans laquelle le gaz de cokerie et/ou le gaz naturel sont mélangés au gaz supérieur du dispositif de réduction DRI (5) et le mélange de gaz obtenu et l'oxygène sont introduits dans la partie inférieure de l'unité de reformage COG (1) et une quantité partielle de l'oxygène est introduite dans la zone centrale de l'unité de reformage COG (1).

8. Installation selon la revendication 7, **caractérisée en ce qu'**elle présente un dispositif servant à évacuer le gaz supérieur du dispositif de réduction DRI (5) hors de ce dernier et servant à amener le gaz supérieur au gaz réducteur provenant de l'unité de reformage COG (1).

9. Installation selon l'une quelconque des revendications 7 ou 8, **caractérisée en ce qu'**elle présente des dispositifs servant à amener une quantité partielle du gaz de cokerie et/ou du gaz naturel aux gaz de sortie de l'unité de reformage COG (1).

10. Installation selon l'une quelconque des revendications 7 à 9, **caractérisée en ce qu'**elle possède un dispositif servant à réchauffer le gaz contenant de la vapeur d'eau et du dioxyde de carbone avant l'introduction dans l'unité de reformage COG (1).

11. Installation selon l'une quelconque des revendications 7 à 10, **caractérisée en ce qu'**elle présente au moins une double lance (10) servant à introduire le mélange de gaz et de l'oxygène dans l'unité de reformage COG (1).

12. Installation selon la revendication 11, **caractérisée en ce que** la double lance (10) réalisée sous la forme d'un double tuyau présente un tuyau intérieur refroidi à l'eau et enveloppé par un tuyau de protection.
